# EUROPÄISCHE PATENTSCHRIFT

(11) **EP 2 853 142 B1**
(45) Veröffentlichungstag und Bekanntmachung des Hinweises auf die Patenterteilung: **09.05.2018**
(21) Anmeldenummer: 14186214.4
(22) Anmeldetag: 24.09.2014
(51) Int. Cl.: A01D 34/30, A01D 34/32

(54) **Antriebsvorrichtung für einen Balkenmäher**
Driving device for a mower bar
Dispositif d'entraînement pour une motofaucheuse

(30) Priorität: 25.09.2013 AT 7392013
(43) Veröffentlichungstag der Anmeldung: 01.04.2015
(73) Patentinhaber: Stöckl, Friedrich, 6283 Hippach (AT)
(72) Erfinder: Stöckl, Friedrich, 6283 Hippach (AT); Stöckl, Lukas, 6283 Hippach (AT)
(74) Vertreter: Torggler & Hofinger Patentanwälte

(56) Entgegenhaltungen:
- DE-A1- 2 206 514
- DE-A1- 2 444 173
- GB-A- 808 508

## Beschreibung

Die vorliegende Erfindung betrifft eine Mähvorrichtung, insbesondere einen Balkenmäher, mit den Merkmalen des Oberbegriffs des Anspruchs 1.

Mähvorrichtungen mit Antriebsvorrichtungen, bei welchen die Antriebskraft eines Antriebsmotors mechanisch auf ein Schneidmesser übertragen wird, sind bereits bekannt. Bei diesen Antriebsvorrichtungen wird das Schneidmesser mechanisch über einen Anschlussflansch angetrieben. Die Kraftübertragung auf den Exzenter erfolgte über komplizierte Gelenkswellen. Solche Konstruktionen sind verhältnismäßig schwer, gefährlich und können im Betrieb leicht beschädigt werden.

Als Alternative zu solchen mechanischen Antriebsvorrichtungen sind auch hydraulische Konstruktionen auf den Markt gekommen, bei welchen ein Hydromotor unmittelbar an eine Kufe der Antriebsvorrichtung angeflanscht ist. Hier ist es nur erforderlich, die Flüssigkeit über am Querträger angeordnete Schläuche zum Hydromotor zu bringen. Nachteilig ist, dass durch die Anordnung des Hydromotors an einer Kufe der Antriebsvorrichtung das zu mähende Gras nieder gedrückt wird und sich daher schlechter mähen lässt. Außerdem weist die Energieübertragung über die Schläuche einen hohen Verlustgrad auf. Dazu kommt, dass die meisten am Markt erhältlichen Fahrzeuge, an denen die Antriebsvorrichtungen befestigt sind (zum Beispiel Einachsschlepper, Motormäher) entweder gar keine Bordhydraulik oder nur eine Bordhydraulik mit unzureichender Leistung aufweisen.

Die DE 24 44 173 A1 und die DE 22 06 514 A1 zeigen Mähvorrichtungen, mit einer Antriebsvorrichtung, mit einem Querträger, an welchem wenigstens ein Schneidmesser so gelagert ist, dass es über einen Exzenter in einer Richtung wenigstens annähernd parallel zum Querträger in einem Mähbereich hin und her bewegbar ist, wobei eine Antriebswelle für den Exzenter vorgesehen ist. Der Exzenter ist in beiden Schriften oberhalb des wenigstens einen Schneidmessers im Mähbereich des wenigstens einen Schneidmessers angeordnet. Es ist ein Umlenkhebel vorgesehen, der einerseits mit dem wenigstens einen Schneidmesser verbunden ist und andererseits mit dem Exzenter verbunden ist.

Die GB 808 508 A zeigt eine Mähvorrichtung mit den Merkmalen des Oberbegriffs des Anspruchs 1.

Aufgabe der Erfindung ist es, eine gattungsgemäße Mähvorrichtung mit einer mechanischen Antriebsvorrichtung so zu verbessern, dass ein Niederdrücken des Grases im Mähbereich vermieden wird und/oder die Kraftübertragung von der Antriebswelle auf den Exzenter einfacher und ggf. weniger schadensanfällig erfolgt. Diese Aufgabe wird durch eine Mähvorrichtung mit den Merkmalen des Anspruchs 1 gelöst. Vorteilhafte Ausführungsformen der Erfindung sind in den abhängigen Ansprüchen definiert.

Der Mähbereich einer Mähvorrichtung ist der Arbeitsbereich des bzw. der Schneidmesser.

Bei der Erfindung ist vorgesehen, dass der Exzenter - vorzugsweise im Bereich eines der beiden Enden des Querträgers - oberhalb des wenigstens einen Schneidmessers angeordnet ist und dass ein Umlenkhebel vorgesehen ist, der einerseits mit dem wenigstens einen Schneidmesser verbunden ist und andererseits mit dem Exzenter verbunden ist. Es ergibt sich ein geringer Verlustgrad. Im Vergleich zur Anordnung eines Hydromotors im Bereich des Schneidmessers, wird ein Niederdrücken des Grases vermieden, obwohl der Exzenter zumindest teilweise, vorzugsweise vollständig, im Mähbereich angeordnet ist.

Es kann vorgesehen sein (unabhängig davon, ob der wenigstens eine Exzenter teilweise oder ganz im Mähbereich angeordnet ist und unabhängig davon, ob ein Umlenkhebel vorgesehen ist), dass die Kraftübertragung geschützt im Inneren des Querträgers verläuft. Der Querträger trägt das bzw. die Schneidmesser. Durch die Anordnung im Inneren des Querträgers wird auch die Produktsicherheit erhöht. Die Kraftübertragung erfolgt über ein Zugmittel, welches in Verbindung mit der Antriebswelle und einer den Exzenter antreibenden Welle einen Hülltrieb oder Umschlingungsgetriebe bildet. Der Verlustgrad ist gering. Das Zugmittel kann aber auch neben dem Querträger - zum Beispiel geschützt in einer Abdeckung wie einem Rohr oder dergleichen - verlaufen

Das Mähwerk der Mähvorrichtung kann als Front-, Heck- oder Seitenmähwerk ausgebildet sein. Das Fahrzeug, an welchem die Mähvorrichtung befestigt ist, kann beispielsweise als Einachsschlepper ausgebildet sein (Motormäher).

Für den Umlenkhebel wird (unabhängig davon, ob der wenigstens eine Exzenter teilweise oder ganz im Mähbereich angeordnet ist) eine mehrarmige Ausbildung (von Drehpunkt des Umlenkhebels aus gesehen) desselben bevorzugt. Beispielsweise kann eine zweiarmige, vorzugsweise auskragende Bauweise gewählt werden. Besonders bevorzugt ist eine Bauweise mit einem geraden Teil, an welchem quer zur Längserstreckung des geraden Teils (also quer zu einer Verbindungslinie der beiden Hebelenden) ein Seitenarm angeordnet ist.

Der Umlenkhebel kann an einem seiner Hebelenden drehbar gelagert sein und an an einem anderen Hebelende mit dem wenigstens einen Schneidmesser verbunden sein und über den quer (zum Beispiel mit einem Winkel von 90° oder weniger relativ zur Längserstreckung des geraden Teils) verlaufenden Seitenarm mit dem Exzenter verbunden sein.

Statt einer auskragenden Bauweise kann vorgesehen sein, dass der Umlenkhebel gerade ausgebildet ist, sodass die Anlenkpunkte für die drehbare Lagerung des Hebels, die Verbindung mit dem Schneidmesser und die Verbindung mit dem Exzenter in einer Linie liegen.

Es können zum Beispiel zwei gegenläufig bewegbare Schneidmesser vorgesehen sein.

Es kann die Anordnung eines hin und her bewegbaren Schneidmessers in Kombination mit einem stationären Gegenmesser vorgesehen sein.

Obwohl die Verwendung eines Zugmittels zur Kraftübertragung von der Antriebswelle auf den Exzenter bevorzugt wird, kann auch vorgesehen sein, die Antriebswelle direkt mit dem Exzenter zu verbinden und vorzugsweise durch einen Hydromotor anzutreiben.

Weitere Vorteile und Einzelheiten der Erfindung ergeben sich anhand der Figuren sowie der dazu gehörigen Figurenbeschreibung. Dabei zeigen:
- Fig. 1a bis 1e: schematische Darstellungen eines Balkenmähers mit einer erfindungsgemäßen Antriebsvorrichtung,
- Fig. 2: eine Schnittdarstellung zur erfindungsgemäßen Antriebsvorrichtung ,
- Fig. 3: eine Detaildarstellung zu den Fig. 2 und 3 im Bereich eines der beiden Umlenkhebel und
- Fig. 4: eine Ansicht eines weiteren Ausführungsbeispieles einer erfindungsgemäßen Antriebsvorrichtung.

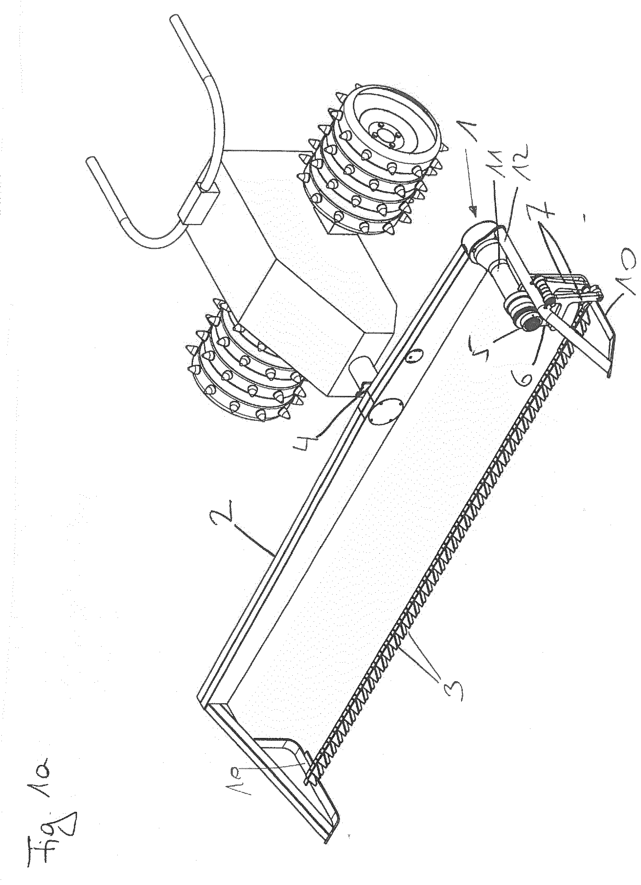

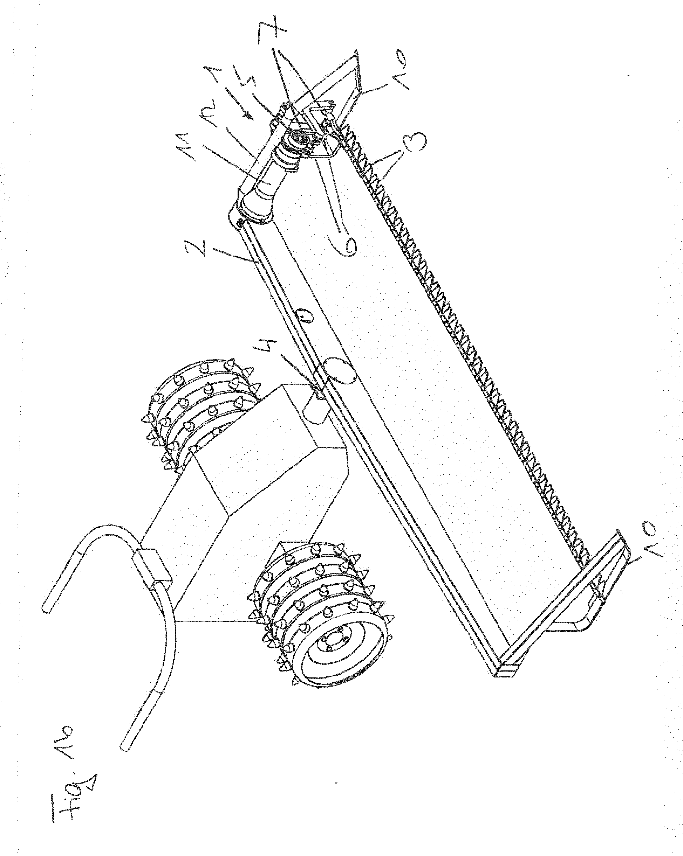

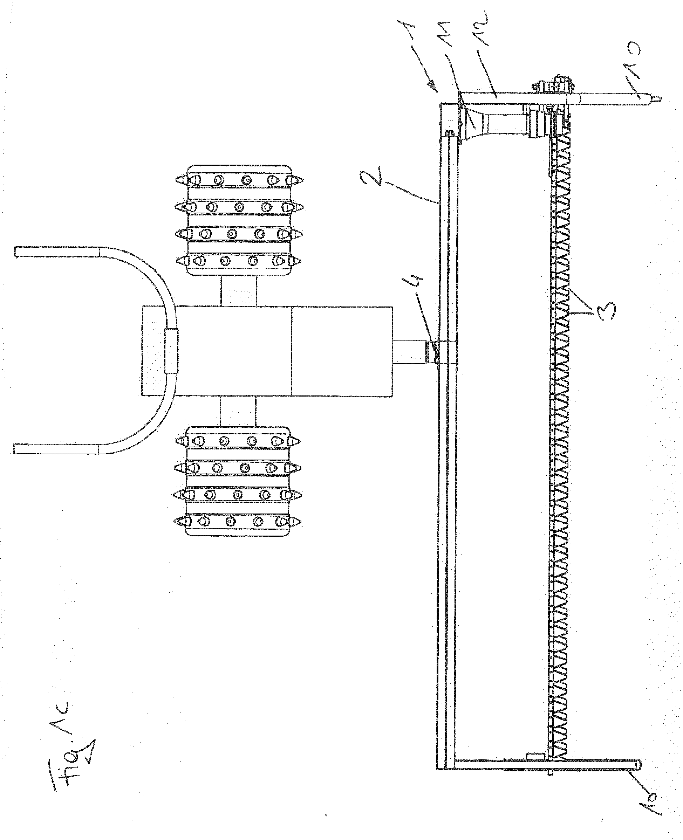

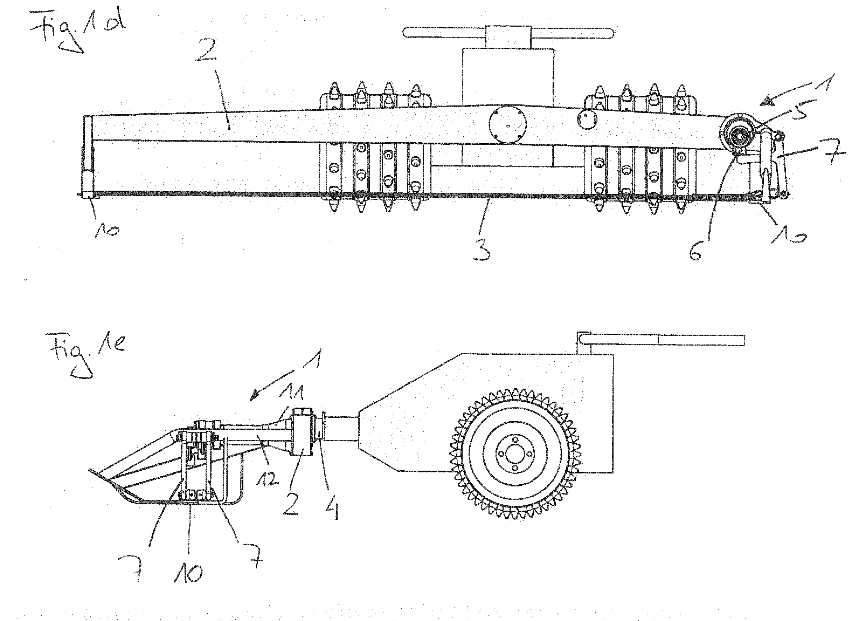

Figur 1 zeigt in verschiedenen Ansichten einen Einachsschlepper mit einem Balkenmäher und einer erfindungsgemäßen Antriebsvorrichtung 1.

Die Mähvorrichtung weist in diesem Ausführungsbeispiel zwei Schneidmesser 3 auf, die durch die erfindungsgemäße Antriebsvorrichtung 1 parallel zum Querträger 2 gegenläufig hin und her bewegbar sind. Über Kufen 10 werden die Schneidmesser 3 vom zu mähenden Gras beabstandet.

Der Antriebsstrang der erfindungsgemäßen Antriebsvorrichtung 1 verläuft wie folgt:
Über eine am Querträger 2 angeordnete Antriebswelle 4 nimmt die Antriebsvorrichtung 1 die für die Hin und Herbewegung der Schneidmesser 3 benötigte Energie auf. Der Antrieb der Antriebswelle 4 und damit die Versorgung mit der erforderlichen Energie erfolgt über das Fahrzeug, an welchem die Antriebsvorrichtung 1 befestigt ist.

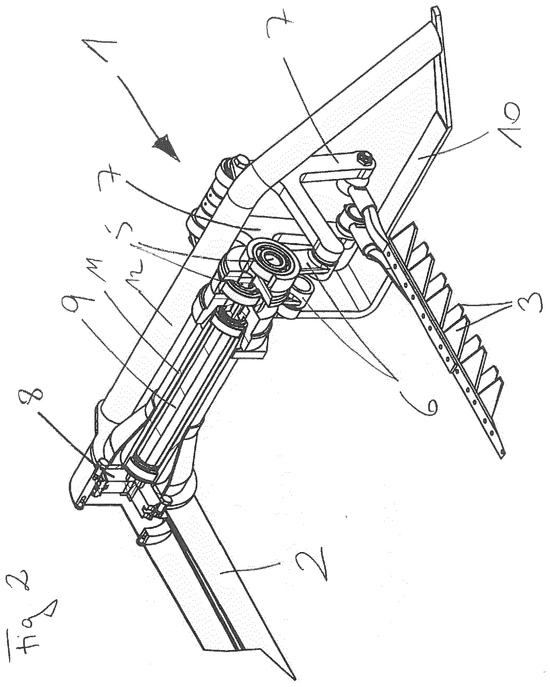

Über ein im Querträger 2 angeordnetes Zugmittel (zum Beispiel Kette oder Riemen), welches zwischen dem im Querträger 2 angeordneten Teil der Antriebswelle 4 und einem Ketten- oder Riemenrad 8 (siehe Figur 2 - das Zugmittel selbst ist nicht dargestellt) verläuft, wird die Energie mechanisch auf das Ketten- oder Riemenrad 8 übertragen.

Über eine quer zum Querträger 2 verlaufende Welle 9 (Figur 2), die mit dem Ketten- oder Riemenrad 8 verbunden ist, wird eine Drehbewegung auf die in diesem Fall zwei Exzenter 5 übertragen. Die Welle 9 ist geschützt in einem Rohr angeordnet.

Wäre nur ein Schneidmesser 3 vorhanden, wäre natürlich nur ein Exzenter 5 erforderlich und auch alle im Folgenden noch besprochenen Komponenten des Antriebsstranges wären nur einfach vorgesehen. Im Folgenden werden nur die für die Hin und Herbewegung eines der beiden Schneidmesser 3 benötigten Komponenten besprochen.

Der Exzenter 5 ist mit einer Pleuelstange 6 verbunden. Die Pleuelstange 6 ist über einen Umlenkhebel 7 mit dem Schneidmesser 3 verbunden. Über den Exzenter 5, die Pleuelstange 6 und den Umlenkhebel 7 wird die ursprüngliche Drehbewegung der Antriebswelle 4 schlussendlich in die Hin und Herbewegung des Schneidmessers 3 umgewandelt.

Der Exzenter 5 ist in Höhe des Querträgers 2 angeordnet. Dadurch kann ein Niederdrücken des zu mähenden Grases perfekt vermieden werden. Weiters verläuft der Antriebsstrang zwischen Antriebswelle 4, Welle 9 und Exzenter 5 in einer Ebene, was vom Wirkungsgrad her vorteilhaft ist. Es könnte aber auch vorgesehen sein, zwischen Antriebswelle 4 oder Welle 9 und Exzenter 5 eine Umlenkvorrichtung (zum Beispiel unter Verwendung zweier Rollen) anzuordnen, sodass in diesem Fall die Antriebswelle 4 bzw. die Welle 9 und Exzenter 5 in unterschiedlichen Ebenen angeordnet sein können.

Zwischen Antriebswelle 4 oder Welle 9 und Exzenter 5 kann auch ein Getriebe vorgesehen sein.

Aus dem Stand der Technik sind bereits Lösungen bekannt, bei welchen das wenigstens eine Schneidmesser an einem einarmigen Hebel gelagert ist, wobei der Exzenter zum Antrieb zwischen dem Drehpunkt des Hebels und dem Anlenkpunkt des wenigstens einen Schneidmessers am Hebel angreift.

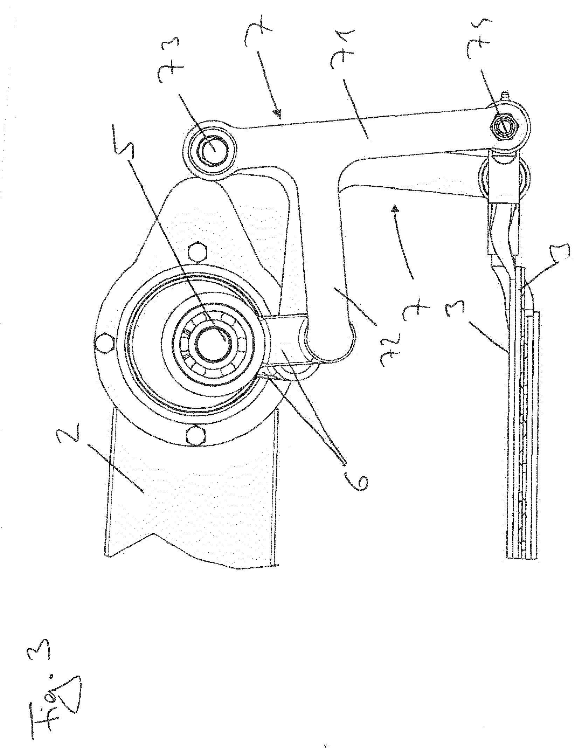

Im Vergleich dazu ist im gezeigten Ausführungsbeispiel ein Umlenkhebel 7 vorgesehen (siehe vor allem Figur 3), der an einem seiner Hebelenden 73 drehbar gelagert ist, an einem anderen Hebelende 74 mit einem Schneidmesser 3 verbunden ist und über einen quer zu einer Verbindungslinie der beiden Hebelenden 73, 74 verlaufenden Seitenarm 72 mit dem Exzenter 5 verbunden ist. Der Umlenkhebel 7 besteht also in diesem Ausführungsbeispiel aus einem gerade verlaufenden Teil 71 mit Hebelenden 73, 74, wobei am gerade verlaufenden Teil 71 quer zu diesem verlaufend ein Seitenarm 72 angeordnet ist.

Die beiden gegenläufig bewegten Schneidmesser 3 werden von nur einer Seite aus über den Umlenkhebel 7 bewegt.

Im gezeigten Ausführungsbeispiel ist unabhängig von der in einem Rohr 11 gelagerten Welle 9 für den Exzenter eine Tragstrebe 12 vorgesehen. In einer vorteilhaften Abwandlung lagert das Rohr 11 selbst (ohne Erfordernis einer gesonderten Tragstrebe 12) die Exzenter 5, Pleuelstange 6 (falls vorhanden) und Umlenkhebel (7) am Querträger 2. Im Rohr 11 ist auch bei dieser Konstruktion die Welle 9 für den bzw. die Exzenter 5 angeordnet.

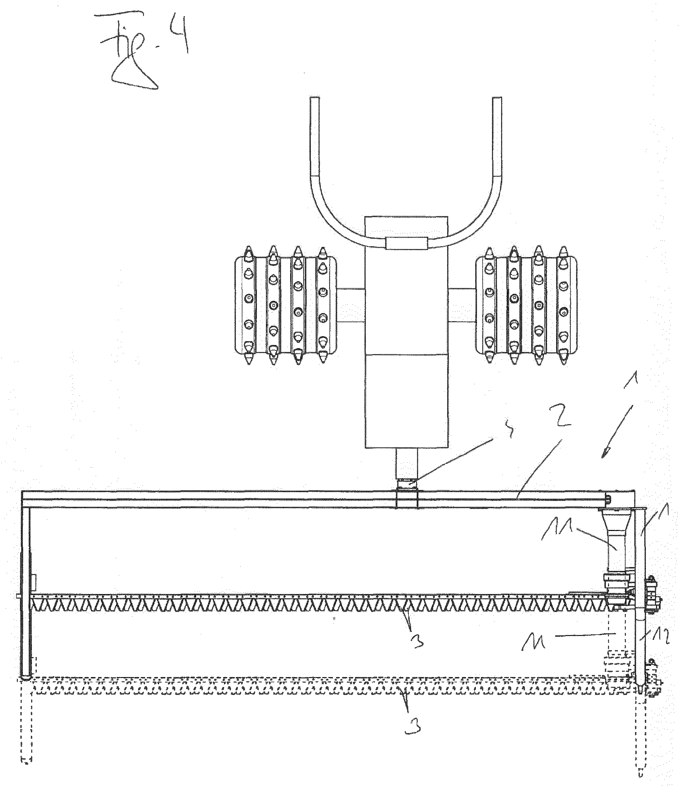

Fig. 4 zeigt (analog zur Fig. 1c) ein Ausführungsbeispiel, bei welchem der Abstand zwischen dem Querträger 2 und den Schneidmessern 3 zwischen einer durchgezogen gezeichneten und einer gestrichelt gezeichneten Position veränderbar ist. Konstruktiv kann dies zum Beispiel mittels einer Teleskopkonstruktion des Rohres 11, der Welle 9 und - falls vorhanden - der Tragstrebe 12 gelöst sein.

## Patentansprüche

1. Mähvorrichtung mit einer Antriebsvorrichtung (1), mit wenigstens einem Querträger (2), an welchem wenigstens ein Schneidmesser (3) so gelagert ist, dass es über einen Exzenter (5) in einer Richtung wenigstens annähernd parallel zum Querträger (2) in einem Mähbereich hin und her bewegbar ist, wobei eine Antriebswelle (4) für den Exzenter (5) vorgesehen ist, und wobei ein Umlenkhebel (7) vorgesehen ist, der einerseits mit dem wenigstens einen Schneidmesser (3) verbunden ist und andererseits mit dem Exzenter (5) verbunden ist, wobei eine Drehachse des Umlenkhebels (7) in einer Richtung quer zum Querträger (2) und parallel zu einer Fahrtrichtung der Mähvorrichtung angeordnet ist, **dadurch gekennzeichnet, dass** der Exzenter (5) oberhalb des wenigstens einen Schneidmessers (3) wenigstens teilweise im Mähbereich des wenigstens einen Schneidmessers (3) angeordnet ist.

2. Mähvorrichtung nach Anspruch 1, **dadurch gekennzeichnet, dass** die Antriebswelle (4) direkt mit dem Exzenter (5) verbunden ist und vorzugsweise durch einen Hydromotor antreibbar ist.

3. Mähvorrichtung nach Anspruch 1, **dadurch gekennzeichnet, dass** die Antriebswelle (4) über ein Zugmittel mit dem Exzenter (5) verbunden ist, wobei das Zugmittel vorzugsweise im Querträger (2) angeordnet ist.

4. Mähvorrichtung nach Anspruch 3, **dadurch gekennzeichnet, dass** das Zugmittel als Kette oder Riemen ausgebildet ist.

5. Mähvorrichtung nach wenigstens einem der Ansprüche 1 bis 4, **dadurch gekennzeichnet, dass** der Exzenter (5) in Höhe des Querträgers (2) oder ggf. des Zugmittels angeordnet ist.

6. Mähvorrichtung nach wenigstens einem der Ansprüche 1 bis 5, **dadurch gekennzeichnet, dass** zwischen Exzenter (5) und Umlenkhebel (7) eine Pleuelstange (6) angeordnet ist.

7. Mähvorrichtung nach wenigstens einem der Ansprüche 1 bis 6, **dadurch gekennzeichnet, dass** der Umlenkhebel (7) an einem seiner Hebelenden (73) drehbar gelagert ist, an einem anderen Hebelende (74) mit dem wenigstens einen Schneidmesser (3) verbunden ist und über einen quer zu oder in einer Verlängerung einer Verbindungslinie der beiden Hebelenden verlaufenden Seitenarm (72) mit seinem zugehörigen Exzenter (5) verbunden ist.

8. Mähvorrichtung nach wenigstens einem der Ansprüche 1 bis 7, **dadurch gekennzeichnet, dass** der Abstand zwischen dem Querträger (2) und dem wenigstens einen Schneidmesser (3) veränderbar ist.

9. Mähvorrichtung nach wenigstens einem der Ansprüche 1 bis 8, **dadurch gekennzeichnet, dass** zwei gegenläufige Schneidmesser (3) vorgesehen sind.

10. Mähvorrichtung nach wenigstens einem der Ansprüche 1 bis 9, **dadurch gekennzeichnet, dass** wenigstens ein stationäres Gegenmesser vorgesehen ist, mit welchem das wenigstens eine hin und her bewegbare Schneidmesser (3) zusammen wirkt.

11. Mähvorrichtung nach wenigstens einem der Ansprüche 1 bis 10, **dadurch gekennzeichnet, dass** der Exzenter (5) vorzugsweise im Bereich eines der beiden Enden des Querträgers (2) angeordnet ist.

12. Mähvorrichtung nach wenigstens einem der Ansprüche 1 bis 11, **dadurch gekennzeichnet, dass** der Exzenter (5) vollständig im Mähbereich des wenigstens einen Schneidmessers (3) angeordnet ist.

13. Mähvorrichtung nach wenigstens einem der Ansprüche 1 bis 12, wobei zwischen Antriebswelle (4) oder Welle (9) und Exzenter (5) eine Umlenkvorrichtung angeordnet ist, sodass in diesem Fall die Antriebswelle (4) bzw. die Welle (9) und Exzenter (5) in unterschiedlichen Ebenen angeordnet sein können.

14. Mähvorrichtung nach wenigstens einem der Ansprüche 1 bis 13, wobei zwischen Antriebswelle (4) oder Welle (9) und Exzenter (5) ein Getriebe vorgesehen ist.

15. Mähvorrichtung nach wenigstens einem der Ansprüche 1 bis 14, wobei Exzenter (5), Umlenkhebel (7) und ggf. die Pleuelstange(n) (6) über ein Rohr (11) am Querträger (2) gelagert sind, wobei vorzugsweise die Welle (9) für den bzw. die Exzenter (5) im Rohr (11) angeordnet ist.

## Claims

1. A mowing apparatus having a drive device (1), having at least one transverse carrier (2) to which at least one cutting blade (3) is so mounted that it is reciprocable by way of an eccentric (5) in a direction at least approximately parallel to the transverse carrier (2) in a mowing region, wherein there is provided a drive shaft (4) for the eccentric (5) and wherein there is provided a deflection lever (7) which is connected on the one hand to the at least one cutting blade (3) and connected on the other hand to the eccentric (5), wherein an axis of rotation of the deflection lever (7) is arranged in a direction transversely relative to the transverse carrier (2) and parallel to a direction of travel of the mowing apparatus, **characterised in that** the eccentric (5) is arranged above the at least one cutting blade (3) at least partially in the mowing region of the at least one cutting blade (3).

2. A mowing apparatus according to claim 1 **characterised in that** the drive shaft (4) is connected directly to the eccentric (5) and is preferably drivable by a hydraulic motor.

3. A mowing apparatus according to claim 1 **characterised in that** the drive shaft (4) is connected to the eccentric (5) by way of a pulling means, wherein the pulling means is preferably arranged in the transverse carrier (2).

4. A mowing apparatus according to claim 3 **characterised in that** the pulling means is in the form of a chain or belt.

5. A mowing apparatus according to at least one of claims 1 to 4 **characterised in that** the eccentric (5) is arranged at the height of the transverse carrier (2) or possibly the pulling means.

6. A mowing apparatus according to at least one of claims 1 to 5 **characterised in that** a connecting rod (6) is arranged between the eccentric (5) and the deflection lever (7).

7. A mowing apparatus according to at least one claims 1 to 6 **characterised in that** the deflection lever (7) is mounted rotatably at one of its lever ends (73), it is connected to the at least one cutting blade (3) at another lever end (74) and it is connected to its associated eccentric (5) by way of a side arm (72) which extends transversely relative to or as a prolongation of a connecting line between the two lever ends.

8. A mowing apparatus according to at least one of claims 1 to 7 **characterised in that** the spacing between the transverse carrier (2) and the at least one cutting blade (3) is variable.

9. A mowing apparatus according to at least one of claims 1 to 8 **characterised in that** there are provided two mutually oppositely moveable cutting blades (3).

10. A mowing apparatus according to at least one of claims 1 to 9 **characterised in that** there is provided at least one stationary counteracting blade with which the at least one reciprocable cutting blade (3) cooperates.

11. A mowing apparatus according to at least one of claims 1 to 10 **characterised in that** the eccentric (5) is preferably arranged in the region of one of the two ends of the transverse carrier (2).

12. A mowing apparatus according to at least one of claims 1 to 11 **characterised in that** the eccentric (5) is arranged completely in the mowing region of the at least one cutting blade (3).

13. A mowing apparatus according to at least one of claims 1 to 12 wherein a deflection device is disposed between the drive shaft (4) or the shaft (9) and the eccentric (5) so that in this case the drive shaft (4) or the shaft (9) and eccentric (5) can be arranged in different planes.

14. A mowing apparatus according to at least one of claims 1 to 13 wherein a transmission is provided between the drive shaft (4) or the shaft (9) and the eccentric (5).

15. A mowing apparatus according to at least one of claims 1 to 14 wherein the eccentric (5), the deflection lever (7) and possibly the connecting rod or rods (6) are mounted to the transverse carrier (2) by way of a tube (11), wherein preferably the shaft (9) for the eccentric or eccentrics (5) is arranged in the tube (11).

## Revendications

1. Dispositif de fauchage doté d'un dispositif d'entraînement (1), doté d'au moins une traverse (2), sur laquelle au moins une lame de tranchage (3) est disposée de manière à être mobile sur une came (5) d'avant en arrière dans une zone de fauchage dans une direction au moins approximativement parallèle à la traverse (2), dans lequel un arbre d'entraînement (4) est prévu pour la came (5), et dans lequel un levier de renvoi (7) est prévu, raccordé d'une part à l'au moins une lame de tranchage (3) et d'autre part à la came (5), dans lequel l'axe de rotation du levier de renvoi (7) est arrangé dans une direction transversale à la traverse (2) et parallèle à la direction de déplacement du dispositif de fauchage, **caractérisé en ce que** la came (5) est arrangée au-dessus de l'au moins une lame de tranchage (3) au moins partiellement dans la zone de fauchage de l'au moins une lame de tranchage (3).

2. Dispositif de fauchage selon la revendication 1, **caractérisé en ce que** l'arbre d'entraînement (4) est raccordé directement à la came (5) et peut être entraîné de préférence par un moteur hydraulique.

3. Dispositif de fauchage selon la revendication 1, **caractérisé en ce que** l'arbre d'entraînement (4) est raccordé à la came (5) par un moyen de traction, dans lequel le moyen de traction est de préférence agencé dans la traverse (2).

4. Dispositif de fauchage selon la revendication 3, **caractérisé en ce que** le moyen de traction est conçu comme une chaîne ou une courroie.

5. Dispositif de fauchage selon au moins une des revendications 1 à 4, **caractérisé en ce que** la came (5) est agencée à hauteur de la traverse (2) ou, le cas échéant, du moyen de traction.

6. Dispositif de fauchage selon au moins une des revendications 1 à 5, **caractérisé en ce qu'**une bielle (6) est agencée entre la came (5) et le levier de renvoi (7).

7. Dispositif de fauchage selon au moins une des revendications 1 à 6, **caractérisé en ce que** le levier de renvoi (7) peut tourner à une de ses extrémités (73), est raccordé par l'autre extrémité (74) à l'au moins une lame de fauchage (3) et est raccordé à sa came (5) associée par une branche latérale (72) s'étendant de manière transversale aux deux extrémités ou dans le prolongement d'une ligne de raccordement de celles-ci.

8. Dispositif de fauchage selon au moins une des revendications 1 à 7, **caractérisé en ce que** l'écart entre la traverse (2) et l'au moins une lame de tranchage (3) est modifiable.

9. Dispositif de fauchage selon au moins une des revendications 1 à 8, **caractérisé en ce que** deux lames de tranchage (3) en sens opposés sont prévues.

10. Dispositif de fauchage selon au moins une des revendications 1 à 9, **caractérisé en ce qu'**au moins une contre-lame stationnaire est prévue, avec laquelle l'au moins une lame de tranchage (3) mobile d'avant en arrière coopère.

11. Dispositif de fauchage selon au moins une des revendications 1 à 10, **caractérisé en ce que** la came (5) est agencée de préférence dans la zone d'une des deux extrémités de la traverse (2).

12. Dispositif de fauchage selon au moins une des revendications 1 à 11, **caractérisé en ce que** la came (5) est agencée complètement dans la zone de fauchage de l'au moins une lame de tranchage (3).

13. Dispositif de fauchage selon au moins une des revendications 1 à 12, dans lequel un dispositif de déviation est agencé entre l'arbre d'entraînement (4) ou l'arbre (9) et la came (5), de sorte que dans ce cas l'arbre d'entraînement (4) ou respectivement l'arbre (9) et la came (5) puissent être agencés à des niveaux différents.

14. Dispositif de fauchage selon au moins une des revendications 1 à 13, dans lequel une boîte de vitesses est agencée entre l'arbre d'entraînement (4) ou l'arbre (9) et la came (5).

15. Dispositif de fauchage selon au moins une des revendications 1 à 14, dans lequel la came (5), le levier de renvoi (7) et éventuellement le(s) bielle(s) (6) sont disposés sur un tube (11) sur la traverse (2), dans lequel de préférence l'arbre (9) pour la ou les cames (5) est agencé dans le tube (11).
